# EUROPÄISCHE PATENTANMELDUNG

(11) **EP 1 318 104 A1**
(43) Veröffentlichungstag der Anmeldung: **11.06.2003**
(21) Anmeldenummer: 02026818.1
(22) Anmeldetag: 28.11.2002
(51) Int. Cl.: C02F 1/00

(54) **Verfahren und Vorrichtung zur mechanischen Behandlung von Wasser**

(30) Priorität: 28.11.2001 DE 10158321
(71) Anmelder: Steiner, Rupert, 6215 Achenkirch 79 (AT)
(72) Erfinder: Thurnwalder, Walter, 6020 Innsbruck (AT)
(74) Vertreter: Popp, Eugen, Dr.

(57) **Zusammenfassung**

Die Erfindung betrifft ein Verfahren und eine Vorrichtung zur physikalischen Behandlung von Wasser, insbesondere zur Qualitätsverbesserung desselben, wobei das zu behandelnde Wasser zwischen einem Zulauf (1) und einem Ablauf (60) längs einer Strömungsbahn (Rohrleitung 61) geleitet wird, die sich über einen Teilkreis von 90° einerseits sowie über einen Teilkreis von etwa 180° andererseits erstreckende Teilabschnitte (2, 3, ... 59) umfaßt.

## Beschreibung

Die Erfindung betrifft ein Verfahren und eine Vorrichtung zur physikalischen Behandlung von Wasser, insbesondere zur Qualitätsverbesserung desselben. Die Maßnahmen zur Gewinnung eines seinem jeweiligen Verwendungszweck angepaßten Wassers faßt man unter dem Begriff "Wasseraufbereitung" zusammen. Dabei richtet sich die Wahl der Aufbereitungs-Verfahren nicht nur nach der Verwendung, sondern auch nach der Beschaffenheit des zu reinigenden Wassers. Im vorliegenden Fall geht es um die Behandlung von Wasser so, daß es Quellwasser-Eigenschaften besitzt. Derartiges Wasser dient zum menschlichen Genuß und Gebrauch. Es soll appetitlich, zum Genuß anregend, farblos, klar, kühl, geruchlos und geschmacklich einwandfrei sein. Außerdem soll es frei von Krankheitserregern und arm an Keimen sein. Es darf gelöste Stoffe nur in engen Grenzen enthalten. Die Trinkwasser-Verordnung vom 22. Mai 1986 (BGBl. I, S. 760) enthält Angaben über die Beschaffenheit von Trinkwasser im Hinblick auf die Abwesenheit von Krankheitserregern. Stellvertretend für diese stehen Escherichia Coli und sog. coliforme Keime. Weiter definieren die Trinkwasser-Verordnung und Trinkwasser-Aufbereitungs-Verordnung Höchstmengen bzw. Grenzwerte sowohl für Chemikalien (Hilfsstoffe), die zur Wasseraufbereitung benötigt werden, als auch für toxische Verunreinigungen. Die meisten Wasseraufbereitungsverfahren sind chemischer Art. Im vorliegenden Fall soll es jedoch um eine rein physikalische Aufbereitung gehen unter dem Gesichtspunkt, daß als Lieferanten für Trinkwasser vorzugsweise Quellen und Bäche in Frage kommen.

Quellen und Bäche wirken auf das fließende Wasser dauerhaft und anhaltend mechanisch ein, wodurch man sich die hohe Qualität des daraus gewonnenen Trinkwassers erklärt. Nicht umsonst wird als Trinkwasser sog. Quellwasser bevorzugt, d.h. Wasser, welches unmittelbar aus einer natürlichen Quelle stammt.

Aufgabe der vorliegenden Erfindung ist es, ein Verfahren und eine Vorrichtung zur Behandlung von Wasser zur Verfügung zu stellen, welches bzw. welche das zu behandelnde Wasser physikalisch bzw. mechanisch ähnlich beaufschlagt wie der Strömungspfad innerhalb einer Quelle. Die Strömung innerhalb einer Quelle soll erfindungsgemäß also "nachvollzogen" werden, und zwar auf möglichst engem Raum, so daß das Verfahren bzw. die Vorrichtung auch in jedem Haushalt zur Anwendung kommen kann.

Das erfindungsgemäße Verfahren ist durch die Merkmale des Anspruches 1, unter die erfindungsgemäße Vorrichtung durch die Merkmale des Anspruches 5 gekennzeichnet.

Der Kern der vorliegenden Erfindung liegt also darin, daß das zu behandelnde Wasser zwischen einem Zu- und Ablauf längs einer Strömungsbahn geleitet wird, die sich über einen Teilkreis von etwa 90° einerseits sowie über einen Teilkreis von etwa 180° andererseits erstreckende Teilabschnitte aufweist, wobei diese Teilabschnitte wechselweise durchströmt werden sollen. Das Wasser wird also längs teilkreisförmiger Strömungsbahnen hin- und hergeleitet, und zwar nach einem vorbestimmten Rhythmus, der vorzugsweise durch die Merkmale des Anspruches 2 bzw. die Merkmale des Anspruches 6 bestimmt ist.

Weitere vorteilhafte Details der Erfindung sind in den Ansprüchen 3, 4 bzw. 7 bis 9 beschrieben, wobei zur Herstellung einer kompakten Behandlungs-Vorrichtung die Merkmale des Anspruches 8 von besonderer Bedeutung sind. Dort erstreckt sich die Strömungsbahn über mehrere übereinander angeordnete Ebenen, d.h. dreidimensional, und zwar vorzugsweise längs der Mantelfläche eines Rotationskörpers, wie Kegelstumpf, Kugel, Zylinder od. dgl.

Es hat sich gezeigt, daß das erfindungsgemäß behandelte Wasser ohne besondere chemikalische Vorkehrungen eine erheblich höhere Haltbarkeit als herkömmliches Wasser besitzt. Dementsprechend eignet sich das erfindungsgemäß behandelte Wasser auch besonders zur Herstellung von Getränken jeder Art, welche Wasser enthalten. Auch geschmacklich besitzt das erfindungsgemäß behandelte Wasser Quellwasser-Qualität. Im Vergleich dazu ist herkömmliches Leitungswasser "tot". Auch hat sich gezeigt, daß bei erfindungsgemäßer Behandlung von Wasser Kalkablagerungen in Leitungen erheblich reduziert werden.

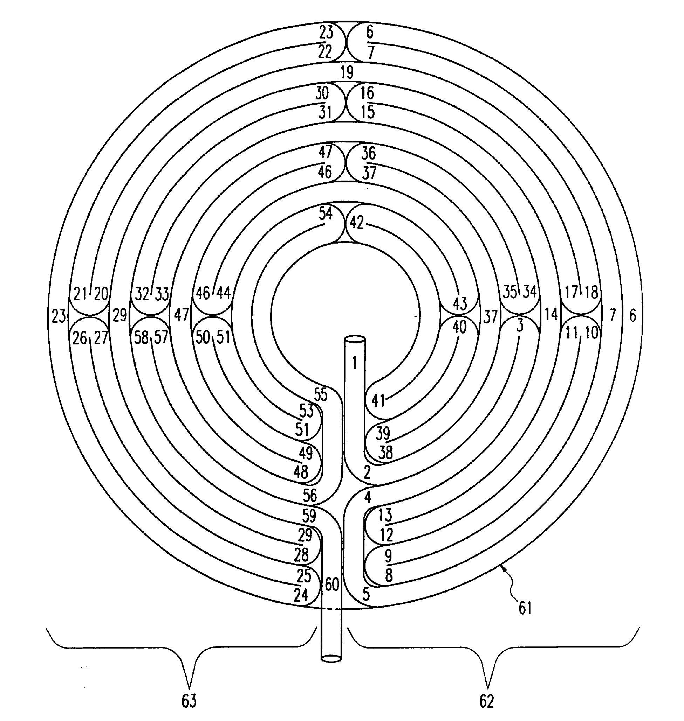

Nachstehend wird eine Ausführungsform einer erfindungsgemäßen Vorrichtung, welche sich innerhalb einer kreisförmigen Ebene erstreckt, anhand der beigefügten Zeichnung näher beschrieben.

Dementsprechend umfaßt die dargestellte Vorrichtung zur physikalischen Behandlung von Wasser eine rohrartige Leitung 61, die zwischen einem Zulauf 1 und einem Ablauf 60 derart gebogen ist, daß sie eine Strömungsbahn definiert, die aus sich über einen Teilkreis von etwa 90° einerseits sowie über einen Teilkreis von etwa 180° andererseits erstreckenden Teilkreisabschnitten besteht. Zwischen den einzelnen Teilkreisabschnitten wird die Strömung um jeweils 180° umgekehrt. Diese Umkehrung erfolgt durch entsprechend geformte Rohrbogenstücke. Der Wasserlauf ist bei der dargestellten Ausführungsform ausgehend vom Zulauf 1 durch fortlaufende Ziffern 2, 3, ... 59 gekennzeichnet. Diese Ziffern kennzeichnen jeweils die Endbereiche eines Teilkreisabschnitts mit Ausnahme der Ziffern 5, 7, 14, 19, 23, 29, 37, 47 und 55. Diese Ziffern kennzeichnen jeweils ein 180°-Bogenstück.

Konkret ist die Strömungsbahn des zu behandelnden Wassers zwischen dem Zulauf 1 und Ablauf 60 durch Teilkreisabschnitte definiert, die sich in Folge über folgende Winkelbereiche erstrecken: 90°/90°/180°/180°/90°/90°/180°/90°/180°/90°/180°/90°/90°/180°/90°/180°/90°/180°/90°/90°/180°/90°/180°/90°/180°/90°/90°/180°/180°/90°/90°.

Die vorgenannten Teilkreisabschnitte erstrecken sich in Draufsicht auf die Strömungsbahn innerhalb eines Kreises, und zwar jeweils innerhalb zweier Kreishälften 62, 63, wobei der 9., 16. und 23. Teilkreisabschnitt sich von einer Kreishälfte 62 bzw. 63 zur anderen 63 bzw. 62 erstreckt. Diese sich jeweils über 180° erstreckende Teilkreisabschnitte sind in der anliegenden Figur mit den Ziffern 19, 35 und 43/44 gekennzeichnet.

Darüber hinaus sei darauf hingewiesen, daß der dem Zulauf 1 folgende erste Teilkreisabschnitt 2/3 ebenso wie de'r dem Ablauf 60 vorgeordnete Teilkreisabschnitt 58/59 sich jeweils etwa auf halber Distanz zwischen dem radial innersten Teilkreisabschnitt und dem radial äußersten Teilkreisabschnitt erstrecken. Des weiteren sind die beiden dem Einlauf folgenden Teilkreisabschnitte ebenso wie die beiden dem Ablauf vorgeordneten Teilkreisabschnitte jeweils 90°-Teilkreisabschnitte, an die sich zwei 180°-Teilkreisabschnitte anschließen bzw. denen zwei 180°-Teilkreisabschnitte vorgeordnet sind. Die nachgeordneten 180°-Teilkreisabschnitte liegen radial außen, während die vorgeordneten 180°-Teilkreisabschnitte radial innen liegen.

Wie bereits eingangs erwähnt, können die Teilkreisabschnitte der Strömungsbahn sich entweder in einer Ebene - wie hier dargestellt - oder alternativ über mehrere Ebenen übereinander längs der Mantelfläche eines Rotationskörpers, wie Kegelstumpf od. dgl., erstrecken.

Statt eines Rotationskörpers ist als Basis für die Strömungsbahn auch eine Pyramide oder ein Pyramidenstumpf zumindest denkbar.

Des weiteren sei an dieser Stelle erwähnt, daß die Strömungsbahn bzw. die diese definierende Rohrleitung 61 innerhalb eines Gehäuses, welches hier nicht näher dargestellt ist, plazierbar ist, aus dem lediglich ein Anschluß für den Wasserzulauf 1 und ein Anschluß für den Wasserablauf 60 vorstehen. Das Gehäuse kann zusätzlich ausgeschäumt sein, um Strömungsgeräusche zu unterdrücken. Andererseits ist es natürlich auch ein Vorteil, wenn das Gehäuse so konzipiert ist, daß die Rohrleitung 61 nach Öffnung des Gehäuses frei zugänglich ist, so daß bei irgendwelchen Undichtigkeiten entsprechende Dichtmaßnahmen durchgeführt werden können.

Schließlich sei noch erwähnt, daß der Zulauf 1 im Verhältnis zum Ablauf 60 radial innen liegt. Außerdem erstrecken sich Zuund Ablauf jeweils radial, jedoch entgegengesetzt zueinander.

Die obigen Ausführungen zur Strömungsbahn des zu behandelnden Wassers lassen im übrigen auch erkennen, daß nach dem 9. Teilkreisabschnitt jeder 7. Teilkreisabschnitt sich von einer Kreishälfte 62 zur anderen Kreishälfte 63 bzw. umgekehrt erstreckt, und zwar in Form eines 180°-Teilkreisabschnitts.

Schließlich sei auch noch darauf hingewiesen, daß die ersten und die letzten sechs Teilkreisabschnitte jeweils drei Teilkreisabschnittspaare bilden, die sich abwechselnd über 90°, 180° und 90° erstrecken.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichenliste

- 1: Wasserzulauf
- 60: Wasserablauf
- 61: Rohrleitung
- 62: Kreishälfte
- 63: Kreishälfte
- 2-59: Ziffern zur Kennzeichnung von Abschnitten, insbesondere Teilkreisabschnitten der Strömungsbahn

## Patentansprüche

1. Verfahren zur physikalischen Behandlung von Wasser, insbesondere zur Qualitätsverbesserung desselben,
**dadurch gekennzeichnet, daß**
das zu behandelnde Wasser zwischen einem Zu- und Ablauf längs einer Strömungsbahn geleitet wird, die sich über einen Teilkreis von etwa 90° einerseits sowie über einen Teilkreis von etwa 180° andererseits erstreckende Teilabschnitte umfaßt.

2. Verfahren nach Anspruch 1,
**dadurch gekennzeichnet, daß**
das zu behandelnde Wasser zwischen Zu- und Ablauf jeweils wie folgt geleitet wird:
a) über einen Teilkreis von etwa 90° und zurück;
b) über einen Teilkreis von etwa 180° und zurück;
c) über einen Teilkreis von etwa 90° und zurück;
d) über einen Teilkreis von etwa 180°;
e) über einen Teilkreis von etwa 90° und zurück;
f) über einen Teilkreis von etwa 180°;
g) über einen Teilkreis von etwa 90°;
h) über einen Teilkreis von etwa 180°;
i) über einen Teilkreis von etwa 90° und zurück;
j) über einen Teilkreis von etwa 180°;
k) über einen Teilkreis von etwa 90°;
l) über einen Teilkreis von etwa 180°;
m) über einen Teilkreis von etwa 90°;
n) über einen Teilkreis von etwa 180°;
o) über einen Teilkreis von etwa 90° und zurück;
p) über einen Teilkreis von etwa 180°;
q) über einen Teilkreis von etwa 90°;
r) über einen Teilkreis von etwa 180°;
s) über einen Teilkreis von etwa 90°;
t) über einen Teilkreis von etwa 180°;
u) über einen Teilkreis von etwa 90° und zurück;
v) über einen Teilkreis von etwa 90° und zurück; und
w) über einen Teilkreis von etwa 90° und zurück.

3. Verfahren nach Anspruch 1 oder 2,
**dadurch gekennzeichnet, daß**
die Teilkreise, längs denen das zu behandelnde Wasser geleitet wird, sich entweder in einer Ebene oder alternativ über mehrere Ebenen übereinander längs der Mantelfläche eines Rotationskörpers, wie Kugel, Kegel bzw. Kegelstumpf, Zylinder od. dgl. erstrecken.

4. Verfahren nach einem der Ansprüche 1 bis 3,
**dadurch gekennzeichnet, daß**
der Zulauf im Verhältnis zum Ablauf radial innen liegt.

5. Vorrichtung zur physikalischen Behandlung von Wasser, insbesondere zur Durchführung des Verfahrens nach einem der Ansprüche 1 bis 4,
**dadurch gekennzeichnet, daß**
sie eine rohrartige Leitung (61) umfaßt, die zwischen einem Zu(1)- und Ablauf (60) derart gebogen ist, daß sie eine Strömungsbahn definiert, die aus sich über einen Teilkreis von etwa 90° einerseits sowie über einen Teilkreis von etwa 180° andererseits erstreckenden Teilkreisabschnitten besteht.

6. Vorrichtung nach Anspruch 5,
**dadurch gekennzeichnet, daß**
die Strömungsbahn des zu behandelnden Wassers zwischen einem Zu(1)- und Ablauf (60) durch Teilkreisabschnitte definiert ist, die sich in Folge über folgende Winkelbereiche erstrecken:
90°/90°/180°/180°/90°/90°/180°/90°/180°/90°/180°/90°/90°/180°/90°/180°/90°/180°/90°/90°/180°/90°/180°/90°/180°/90°/90°/180°/180°/90°/90°.

7. Vorrichtung nach Anspruch 6,
**dadurch gekennzeichnet, daß**
die Teilkreisabschnitte sich in Draufsicht auf die Strömungsbahn innerhalb eines Kreises erstrecken, und zwar jeweils innerhalb zweier Kreishälften (62, 63), wobei der 9., 16. und 23. Teilkreisabschnitt, d.h. nach dem 9. Teilkreisabschnitt jeder 7. Teilkreisabschnitt sich von einer Kreishälfte (61 bzw. 63) zur anderen Kreishälfte (63 bzw. 62) erstreckt.

8. Vorrichtung nach einem der Ansprüche 5 bis 7,
**dadurch gekennzeichnet, daß**
die Teilkreisabschnitte der Strömungsbahn sich entweder in einer Ebene oder alternativ über mehrere Ebenen übereinander längs der Mantelfläche eines Rotationskörpers, wie Kegelstumpf, Kugel, Zylinder od. dgl. erstrecken.

9. Vorrichtung nach einem der Ansprüche 5 bis 8,
**dadurch gekennzeichnet, daß**
die Strömungsbahn innerhalb eines Gehäuses plaziert, aus dem lediglich ein Anschluß für den Wasserzulauf (1) und ein Anschluß für den Wasserablauf (60) vorstehen.
